# EUROPÄISCHE PATENTSCHRIFT

(11) **EP 1 038 737 B1**
(45) Veröffentlichungstag und Bekanntmachung des Hinweises auf die Patenterteilung: **03.05.2006**
(21) Anmeldenummer: 00102373.8
(22) Anmeldetag: 04.02.2000
(51) Int. Cl.: B60R 21/20

(54) **Befestigungsanordnung für ein Airbagmodul**
Mounting arrangement for an airbag module
Agencement de montage d'un module de coussin gonflable

(30) Priorität: 23.03.1999 DE 19913039
(43) Veröffentlichungstag der Anmeldung: 27.09.2000
(73) Patentinhaber: Bayerische Motoren Werke Aktiengesellschaft, 80809 München (DE)
(72) Erfinder: Kelm, Rüdiger, 84036 Hohenegglkofen (DE); Kühl, Michael, 83229 Aschau (DE)

(56) Entgegenhaltungen:
- EP-A- 0 357 225
- DE-A- 4 220 704
- DE-A- 4 433 014
- DE-A- 19 531 876
- DE-A- 19 537 233
- DE-A- 19 833 552
- US-A- 5 664 801
- US-A- 5 669 626

## Beschreibung

Die Erfindung bezieht sich auf eine Befestigungsanordnung für ein Airbagmodul in einer vorderen Karosseriestruktur eines Fahrzeuges, wie sie im Oberbegriff beschrieben ist.

Aus der DE 36 11 486 A1 ist eine derartige Befestigungsanordnung bekannt. Ein Querträger der vorderen Karosseriestruktur ist hier mit einer Ausnehmung versehen, in die das Airbagmodul bei Bedarf einsetzbar ist. Über die Art der Halterungen und der Befestigung in dieser Ausnehmung ist jedoch im einzelnen nichts ausgesagt.

Im Gegensatz hierzu zeigt die DE 195 31 876 A1 einen Querträger aus einem Leichtmetallstrangpressprofil mit einer nach oben offenen Nut und einer Anlagefläche. In die Nut lässt sich ein Steg des Airbagmoduls einführen. Dabei wird das Airbagmodul gleichzeitig in Uhrzeigerrichtung geschwenkt, bis beim Erreichen des Anbauzustandes eine Anschlagfläche des Airbagmodus an der Anlagefläche des Querträgers anliegt. Gesichert wird die Verbindung durch einen Passstein oder eine Keilleiste.

Aufgabe der Erfindung ist es, ein Airbagmodul in der vorderen Karosseriestruktur raumsparend und montagefreundlich im Querträger unterzubringen.

Die Aufgabe wird erfindungsgemäß mit den kennzeichnenden Merkmalen des Hauptanspruchs gelöst. Weitere vorteilhafte Ausführungen der Erfindung ergeben sich aus den Unteransprüchen.

Die Erfindung sieht also einen Querträger vor mit Halterungen, in die sich das Airbagmodul einschieben und durch anschließendes Verdrehen in seine Gebrauchslage überführen läßt. Durch einen solchen Drehverschluß ist die Demontage bzw. der Ersatz möglich, ohne den Querträger insgesamt zu demontieren. Durch entsprechende Ausgestaltung des Querträgers bzw. seines Aufnahmeabschnittes läßt sich das Airbagmodul von unten und damit montagefreundlich einfügen.

Die vollständige Integration des Airbagmoduls in dem Querträger gibt Platz frei für weitere Fahrzeugaggregate. Des weiteren wird durch die Integration die Bauteilsteifigkeit des Moduls zum Verstärken des Querträgers miteinbezogen. Dies wirkt sich besonders vorteilhaft aus bei einem Querträger, der als Tragrohr ausgebildet ist. Das Tragrohr kann diesem Fall schwächer dimensioniert und somit im Gewicht reduziert werden gegenüber einem Tragrohr ohne die erfindungsgemäße Anordnung. Im übrigen ist die sonstige Ausgestaltung des Tragrohrs durch die Integration des Airbagmoduls nicht beeinträchtigt.

### [Beispiele]

Weitere vorteilhafte Ausgestaltungen der Erfindung ergeben sich aus der nachfolgenden Beschreibung und anhand der dazugehörenden Zeichnung. Es zeigen
- Fig. 1: in perspektivischer Darstellung, bruchstückhaft und schematisch den vorderen Abschnitt eines Kraftfahrzeuges,
- Fig.2: in perspektivischer Darstellung ein Airbagmodul und ein darüber angeordneter Aufnahmeabschnitt eines Querträgers und
- Fig. 3: in Seitenansicht die Montage des Airbagmoduls.

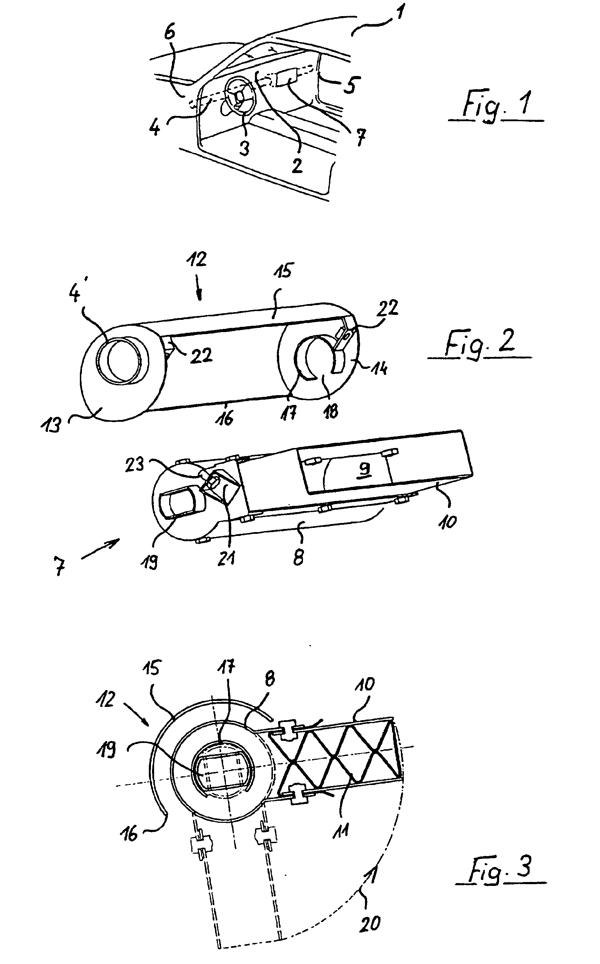

Fig. 1 lenkt den Blick in das Innere einer Karosserie 1 eines Kraftfahrzeuges. Es ist ein Armaturenbrett 2 angedeutet und ein in das Fahrzeuginnere ragendes Lenkrad 3. Hinter dem Armaturenbrett 2 verläuft - gestrichelt dargestellt - ein als Tragrohr ausgebildeter Träger 4, der sich quer zur Fahrtrichtung von der einen Seitenwand 5 zur anderen Seitenwand 6 erstreckt. An den Seitenwänden 5, 6 ist das Tragrohr in geeigneter Weise, beispielsweise durch Schweißen befestigt.

Auf der Beifahrerseite nimmt das Tragrohr 4 ein Airbagmodul 7 auf. Die Fig. 2 und 3 zeigen das Airbagmodul und seine Anordnung am Tragrohr in vergrößertem Maßstab an. Nach Fig. 2 besteht das Airbagmodul 7 aus einem länglichen Gasgenerator 8, dessen Gasaustrittsöffnung 9 durch ein schachtartiges Gehäuse 10 verlängert ist. Wie in Fig. 3 erkennbar, findet in diesem Gehäuse 10 ein Luftsack 11 Platz. Nicht näher bezeichnet Schrauben sichern das Gehäuse 10 am Gasgenerator 8.

Zurückkehrend zu Fig. 2 ist über dem Airbagmodul 7 ein hohlzylindrischer Zwischenabschnitt 12 erkennbar, der zur Aufnahme des Airbagmoduls 7 dient und Teil des Tragrohres 4 ist, wie dies ein Rohrstummel 4' andeutet. Fig. 2 zeigt das Airbagmodul 7 und den Zwischenabschnitt 12 in ihrer tatsächlichen Ausrichtung zum Fahrzeug. Entsprechend hat der Zwischenabschnitt 12 zwei zur jeweiligen Fahrzeugseite zeigende Zylinderböden 13, 14. Desweiteren ist der Zylindermantel 15 nicht geschlossen, sondern überdeckt nur etwa die Hälfte des Umfangs. Er läßt dadurch eine Öffnung 16 frei, die nach unten und in Richtung Fahrzeuginnere zeigt.

An den Innenseiten der Zylinderböden sind kreisförmig gebogene Halterungen 17 aus Blechstreifen angeschweißt (wegen der Darstellungsart ist nur einer erkennbar). Diese Halterungen 17 sind wiederum in Umfangsrichtung nicht vollständig geschlossen, sondern geben eine nach unten zeigende Öffnung 18 frei. Der Öffnungswinkel ist kleiner als der des Zylindermantels, jedoch liegt er in dessen Öffnungsbereich

An den ebenfalls zu den Fahrzeugseiten zeigenden Stirnseiten des Gasgenerators 8 sind im Zentrum Lageransätze 19 befestigt (wiederum nur ein Lageransatz sichtbar). Die Lageransätze sind ebenfalls aus Blechstreifen gebildet und haben in etwa die Form eines länglichen Rechteckquaders, dessen Schmalseiten jedoch der Innenkrümmung der Lagerungen 17 nachgebildet sind. Die Länge der Lageransätze 19 entsprechen dem Innendurchmesser der Halterungen 17. Durch diese Ausgestaltung stellen die Lageransätze 19 zusammen mit den Halterungen 17 Drehverschlüsse dar, deren Wirkungsweise weiter unter noch näher beschrieben ist. In der Gebrauchslage des Moduls er-Moduls erstrecken sich die Lageransätze 19 in etwa horizontal.

Die Montage des Airbagmoduls 7 zeigt die Fig. 3. Dabei ist das Airbagmodul gestrichelt in einer ersten Montagestufe und mit ausgezogenen Linien in der endgültigen Gebrauchslage dargestellt. Das Airbagmodul 7 wird von unten in den Zwischenabschnitt 12 so eingeschoben, daß die Lageransätze 19 durch die Öffnungen 18 vollständig in den Halterungen 17 eintauchen. Sodann wird das Airbagmodul 7 in Pfeilrichtung 20 nach oben geschwenkt bis es mit Schraubenhalterungen 21 (Fig.2) an Gegenlager 22 des Zwischenabschnitts 12 anstößt und so die endgültige Gebrauchslage erreicht. Dabei wirken die Lageransätze 19 zusammen mit den Halterungen 17 wie ein Drehgelenke, in denen die Schmalseiten der Lageransätze 19 entlang der Innenwandungen der Halterungen 17 gleiten In einem letzten Schritt werden Schrauben 23 in die Schraubenhalterungen 21 eingesetzt und in Gewindelöcher der Gegenlager 22 eingeschraubt, so daß das Airbagmodul sicher an dem Zwischenabschnitt befestigt ist (in Fig.3 nicht im einzelnen dargestellt).

### [Bezugszeichenliste]

- 1: Karosserie
- 2: Armaturenbrett
- 3: Lenkrad
- 4: Tragrohr
- 4': Rohrstummel
- 5: Seitenwand
- 6: Seitenwand
- 7: Airbagmodul
- 8: Gasgenerator
- 9: Gasaustrittsöffnung
- 10: schachtartiges Gehäuse
- 11: Luftsack
- 12: Zwischenabschnitt
- 13: Zylinderboden
- 14: Zylinderboden
- 15: Zylindermantel
- 16: Zylinderöffnung
- 17: Halterungen
- 18: Öffnung
- 19: Lageransätze
- 20: Pfeilrichtung
- 21: Schraubenhalterung
- 22: Gegenlager
- 23: Schrauben

## Patentansprüche

1. Befestigung eines Airbagmoduls (7) in einer vorderen Karosseriestruktur eines Fahrzeuges im Bereich eines Armaturenbretts (2), bei der die Karosseriestruktur einen quer verlaufenden, an den beiden Seitenwänden der Karosserie (5, 6) befestigten Querträger (4) aufweist mit einem Aufnahmeabschnitt (12) für das im wesentlichen aus Gasgenerator (8) und Luftsack (11) bestehenden Airbagmodul (7), wobei in dem Aufnahmeabschnitt (12) Halterungen (17) vorgesehen sind, in die Lageransätze (19) des Airbagmoduls (7) einschiebbar und in denen das Airbagmodul (7) zur Positionierung in die Gebrauchslage verdrehbar ist, **dadurch gekennzeichnet, dass** die Halterungen (17) als kreisförmig gebogene Blechstreifen ausgebildet sind, die in Umfangsrichtung nicht vollständig geschlossen sind, sondern eine Öffnung freigeben, in die die Lageransätze (19) des Airbagmoduls (7) einschiebbar und in den Halterungen verdrehbar sind, wobei die Lageransätze (19) etwa die Form eines länglichen Rechteckquaders haben, dessen Schmalseiten der Innenkrümmung der Halterungen (17) nachgebildet sind und wobei die Längen der Lageransätze (19) den Innendurchmesser der Halterungen (17) entsprechen.

2. Befestigung nach Anspruch 1, bei der das Airbagmodul (7) als längliches Aggregat ausgebildet ist mit je zu den Seitenwänden der Karosserie zeigenden Stirnseiten, **dadurch gekennzeichnet, dass** die Lageransätze (19) an den Stirnseiten angeformt sind.

3. Befestigung nach Anspruch 2, **dadurch gekennzeichnet, dass** der Querträger (4) als Tragrohr ausgebildet ist mit einem hohlzylindrischen Zwischenabschnitt (12) zur Aufnahme des Airbagmoduls (7), an dessen beidseitigen Zylinderböden (13, 14) einwärts gerichtete Halterungen (17) für die Lageransätze (19) des Airbagmoduls (7) angeformt sind und, dessen Zylindermantel (15) eine Öffnung (16) für das Einsetzen des Airbagmoduls (7) aufweist.

4. Befestigung nach einem der Ansprüche 1 bis 3, **dadurch gekennzeichnet, dass** Schrauben (23) das Airbagmodul (7) am Querträger (4) befestigen.

## Claims

1. A fastening for an airbag module (7) in a front body structure of a vehicle in the neighbourhood of a dashboard (2), wherein the body structure comprises a transversely extending crossmember (4) fastened to the two side walls (5, 6) of the body and with a receiving portion (12) for the airbag module (7) substantially made up of the gas generator (8) and airbag (11), wherein the receiving portion (12) is provided with holders (17) into which the bearing attachments (19) of the airbag module (7) are insertable and in which the airbag module (7) is rotatable into the operating position, **characterised in that** the holders (17) are circular bent sheet-metal strips which are not completely closed in the peripheral direction but leave an opening into which the bearing attachments (19) of the airbag module (7) can be inserted and rotated in the holders, wherein the bearing attachments (19) are approximately in the shape of an elongate rectangle with minor sides simulating the inner curvature of the holders (17) and wherein the length of the bearing attachments (19) equals the inner diameter of the holders (17).

2. A fastening according to claim 1, wherein the airbag module (7) is an elongate unit with end faces pointing towards the respective side walls of the body, **characterised in that** the bearing attachments (19) are integrally formed on the endfaces.

3. A fastening according to claim 2, **characterised in that** the crossmember (4) is a supporting tube with a hollow cylindrical intermediate portion (12) for receiving the airbag module (7), inwardly directed holders (17) for the bearing attachments (19) of the airbag module (7) being integrally formed on the two ends (13, 14) of the cylinder and the cylinder jacket (15) having an opening (16) for inserting the airbag module (7).

4. A fastening according to any of claims 1 to 3, **characterised in that** screws (23) fasten the airbag module (7) to the crossmember (14).

## Revendications

1. Fixation d'un module de coussin gonflable (7) dans une structure avant de carrosserie d'un véhicule à moteur au niveau d'un tableau de bord (2), dans laquelle la structure de carrosserie présente une traverse (4) transversale fixée sur les deux parois latérales de la carrosserie (5, 6), avec un tronçon d'accueil (12) pour le module de coussin gonflable (7) constitué essentiellement d'un générateur de gaz (8) et d'un sac gonflable (11), et des emboîtements (17) prévus dans le tronçon d'accueil (12), pour insérer des épaulements de palier (19) du module de coussin gonflable (7) et dans lesquels le module de coussin gonflable (7) peut pivoter pour se positionner dans la position d'utilisation,
**caractérisée en ce que**
les emboîtements (17) sont en forme de bandes de tôle recourbées en forme de cercle qui ne sont pas entièrement fermées dans le sens de la périphérie mais dégagent une ouverture dans laquelle les épaulements de palier (19) du module de coussin gonflable (7) peuvent être insérés et peuvent pivoter dans les emboîtements, les épaulements de palier (19) ayant approximativement la forme d'un rectangle longitudinal dont les petits côtés sont calqués sur la courbure intérieure des attaches (17) et dont les grands côtés des épaulements de palier (19) correspondent au diamètre intérieur des emboîtements (17).

2. Fixation selon la revendication 1, dans laquelle le module de coussin gonflable (7) a la forme d'un ensemble longitudinal comportant des faces frontales dirigées chacune vers les côtés latéraux de la carrosserie,
**caractérisée en ce que**
les épaulements de palier (19) sont façonnés sur les faces frontales.

3. Fixation selon la revendication 2,
**caractérisée en ce que**
la traverse (4) est en forme de tube support comportant un tronçon intermédiaire (12) cylindrique creux pour loger le module de coussin gonflable (7) sur les fonds de cylindre des deux côtés (13, 14) duquel se trouvent des emboîtements (17), dirigés vers l'intérieur, pour les épaulements de palier (19) du module de coussin gonflable (7) et dont le corps de cylindre (15) présente une ouverture (16) pour la mise en place du module de coussin gonflable (7).

4. Fixation selon l'une quelconque des revendications 1 à 3,
**caractérisée en ce que**
des vis (23) fixent le module de coussin gonflable (7) sur la traverse (4).
